Europäisches Patentamt

European Patent Office

Office européen des brevets

(19)

(11) Veröffentlichungsnummer : **0 161 336
B1**

(12) ## EUROPÄISCHE PATENTSCHRIFT

(45) Veröffentlichungstag der Patentschrift :
02.03.88

(51) Int. Cl.⁴ : **G 06 F 13/12**

(21) Anmeldenummer : 84114790.3

(22) Anmeldetag : 05.12.84

(54) **Verfahren und Anordung zum Austausch von Datenwörtern zwischen zwei Speichern, zum Beispiel dem Pufferspeicher in einem Byte-multiplexkanal und einem Pufferspeicher der übergeordneten Ein-Ausgabesteuerung einer Datenverarbeitungsanlage.**

(30) Priorität : 03.04.84 DE 3412466

(43) Veröffentlichungstag der Anmeldung :
21.11.85 Patentblatt 85/47

(45) Bekanntmachung des Hinweises auf die Patenterteilung : 02.03.88 Patentblatt 88/09

(84) Benannte Vertragsstaaten :
AT BE CH DE FR GB IT LI NL SE

(56) Entgegenhaltungen :
DE-B- 1 966 633
DE-C- 3 151 937
FR-A- 2 341 898
COMPUTER DESIGN, Band 20, Nr. 2, Februar 1981, Seiten 105-111, Winchester, Mass., US; P. HAIN: "I/O subsystem uses idle CPU resources"

(73) Patentinhaber : **Siemens Aktiengesellschaft Berlin
und München
Wittelsbacherplatz 2
D-8000 München 2 (DE)**

(72) Erfinder : **Rubner, Wolfgang, Dipl.-Ing.
Altdorferstrasse 10
D-8000 München 21 (DE)**
Erfinder : **Theimer, Manfred, Dipl.-Ing. (FH)
Höglwörtherstrasse 357
D-8000 München 70 (DE)**

EP 0 161 336 B1

## Beschreibung

Die Erfindung betrifft ein Verfahren und eine Anordnung zum Austausch von Datenwörtern zwischen zwei Speichern entsprechend dem Oberbegriff des Patentanspruches 1.

Die Notwendigkeit, Daten zwischen zwei Speichern auszutauschen ergibt sich in vielen Bereichen der Technik, insbesondere auf dem Gebiet der Datenverarbeitung. Infolge des immer stärkeren Einsatzes von Mikroprozessorsteuerungen laufen derartige Übertragungen vielfach taktgesteuert ab, wobei sich Datentransfers bei ausreichend enger Kopplung der beiden Speicher mit der Mikroprozessorsteuerung und ausreichend schnellen Speichern ohne weiteres innerhalb eines Arbeitszyklus der Mikroprozessorsteuerung ausführen lassen.

Diese Voraussetzungen sind aber vielfach nicht gegeben. Insbesondere kann einer der beiden Speicher langsamer arbeiten und/oder in einer etwas weiter entfernt liegenden Einrichtung untergebracht sein, so daß die Speicherarbeitszeiten zusammen mit den Laufzeiten für die Ansteuerung des Speichers und für die Übertragung des dabei gelesenen Datenwortes zum anderen Speicher die Dauer eines Arbeitszyklus übersteigen. Ähnliche Auswirkungen haben auch Anpassungsschaltungen für den Übergang von einer Schaltkreistechnologie in eine andere, z. B. beim Übergang von der ECL-Technik in die TTL-Technik.

Die Folge ist eine Verringerung des Datendurchsatzes, was zu Verzögerungen in der Ausführung von Aufgaben durch die Mikroprozessorsteuerung führt und deren Leistungsfähigkeit beeinträchtigt.

Aufgabe der Erfindung ist es daher, trotz größerer Transferzeiten für den Datenaustausch diesen durch Verringerung von Totzeiten zu steigern, damit die Mikroprozessorsteuerung effektiver arbeiten kann.

Diese Aufgabe wird bezüglich des Verfahrens gemäß der Erfindung durch die kennzeichnenden Merkmale des Patentanspruches 1 gelöst.

Danach unterteilt man die Ausführung eines Datentransfers zwischen den beiden Speichern in mehrere Phasen, die taktgesteuert von der Mikroprozessorsteuerung ausgelöst werden, wobei als Steuerimpuls jeweils ein vom Arbeitszyklus der Mikroprozessorsteuerung mit fester Phasenlage abgeleiteter Taktimpuls wirkt. Dieser Taktimpuls steuert dabei alle Übertragungsphasen einheitlich, wobei jeweils eine Speicherung bzw. Zwischenspeichereung der jeweils in der vorhergehenden Übertragungsphase bereitgestellten Informationen vorgenommen wird. Die Informationsweiterleitung gestaltet sich damit ähnlich der in einer Registerkette, deren Durchlaufen zwar die Dauer eines Arbeitszyklus der Mikroprozessorsteuerung übersteigt, die aber bei fortlaufendem Betrieb, also bei Übertragung von mehreren Datenwörtern hintereinander, diese als geschlossene Folge am Ausgang zur Verfügung stellt. Totzeiten bleiben also lediglich auf den Anfang der Datenübertragung beschränkt und fallen umso weniger ins Gewicht, je größer die in einem Zuge zu übertragende Datenmenge ist. Auch ergeben sich keine Synchronisationsprobleme, da nur ein einziger Taktimpuls je Arbeitszyklus maßgebend ist, der zweckmäßig dem Übernahmeimpuls gegen Ende des Arbeitszyklus entspricht.

In vielen Fällen genügt gemäß der durch den Patentanspruch 2 beschriebenen Lösungsvarianten eine Unterteilung in drei Übertragungsphasen, nämlich dann, wenn die Ansteuerung des Datenwortes im entfernten Speicher und die Übertragung des gelesenen Datenwortes zum anderen Speicher in zwei Arbeitszyklen abgeschlossen werden könnte. Die zusätzlich eingeführte dritte Übertragungsphase stellt aber sicher, daß nur ein einheitlicher Taktimpuls je Arbeitszyklus benötigt wird und daß das Lesen im entfernten Speicher und das Schreiben im anderen Speicher überlappend ausgeführt werden kann.

Wird zusätzlich gemäß dem Kennzeichen des Patentanspruches 3 der Datentransfer zum entfernten Speicher analog der ersten Übertragungsphase des Datentransfers für die Gegenrichtung abgewickelt, wobei neben der Adresse für die Speicheransteuerung zusätzlich das zu übertragende Datenwort zwischengespeichert und unmittelbar danach auch in den entfernten Speicher eingeschrieben wird, dann können in einfacher Weise auch Schreib- und Leseaufträge abwechselnd von der Mikroprozessorsteuerung ausgeführt werden, ohne daß deren Leistungsfähigkeit gemindert wird.

In ähnlicher Weise lassen sich durch die Lösungsvariante gemäß dem Patentanspruch 4 auch größere Laufzeiten überbrücken. In allen Übertragungswegen ist dann wenigstens eine weitere Zwischenspeicherung in der Nähe des ersten Speichers vorzusehen. Auch in diesem Falle umfaßt die erste Übertragungsphase immer den gesamten Weg bis zum entfernten Speicher, da die bereitgestellten Informationen jeweils durch einen einzigen Phasensteuerimpuls nacheinander von Zwischenspeicherungsstufe zu Zwischenspeicherungsstufe weitergeleitet werden, bis der entfernte Speicher erreicht ist. Auf dem Rückweg dagegen werden die Datenwörter mit jedem Phasensteuerimpuls nur jeweils um eine Stufe weitergeleitet.

Der Aufwand zur Durchführung der Verfahren gemäß der Erfindung ist in allen Fällen äußerst gering, da in allen Übertragungswegen nur zusätzliche taktgesteuerte Register zur Zwischenspeicherung erforderlich sind, deren Takteingänge alle mit derselben Taktleitung des Mikroprozessors verbunden sind.

Einzelheiten der Erfindung seien nachfolgend anhand von in der Zeichnung dargestellten Ausführungsbeispielen näher erläutert. Im einzelnen zeigen

Fig. 1 ein Übersichtschaltbild eines Ein-/Ausgabewerkes einer Datenverarbeitungsanlage,

Fig. 2 einen vereinfachten Ausschnitt aus dem Übersichtschaltbild nach Fig. 1 zur Erläuterung der Erfindung,

Fig. 3 eine Tabelle zur Verdeutlichung der Überlagerung der verschiedenen Übertragungsphasen eines Datentransfers,

Fig. 4 ein in Anlehnung an Fig. 2 erweitertes Schaltbild und

Fig. 5 ein dazugehöriges Zeitdiagramm.

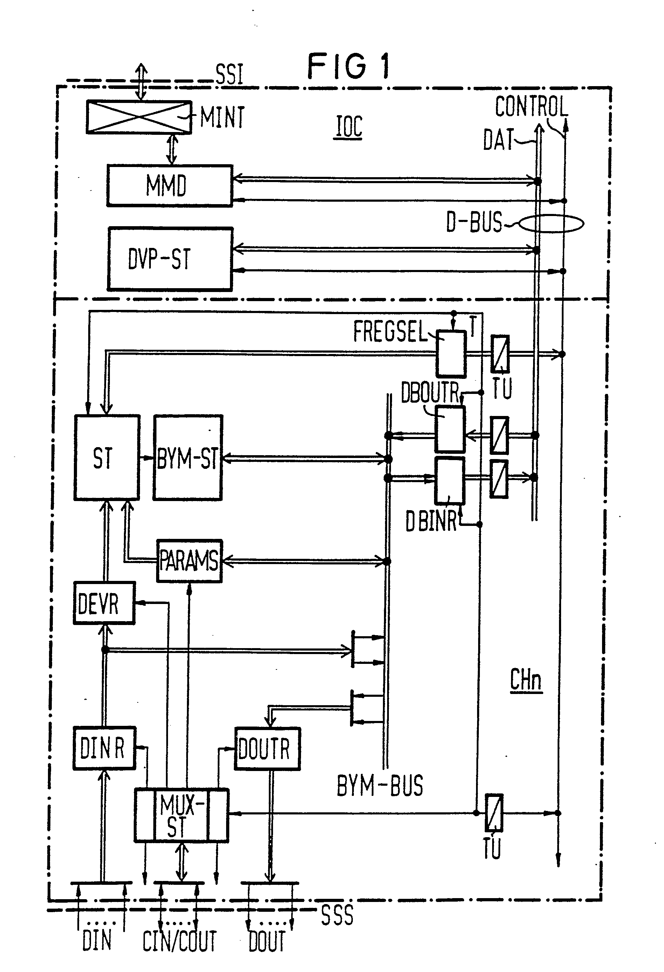

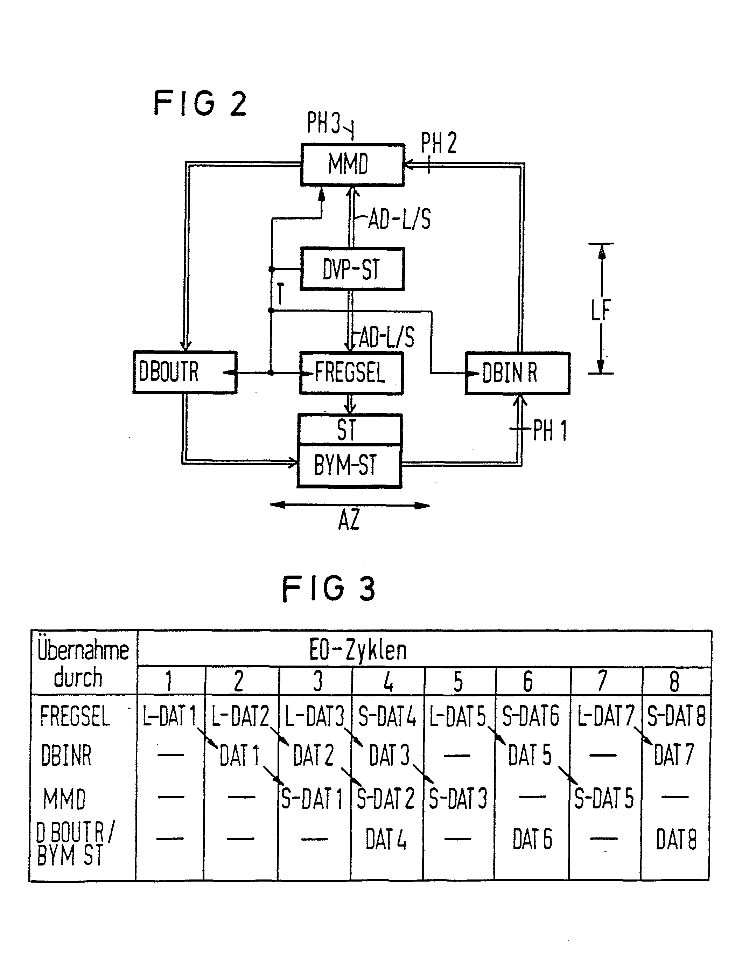

Fig. 1 zeigt in Anlehnung an Fig. 3 der DE-PS 31 51 937 Einzelheiten einer Kanalsteuerung CHn für einen Bytemultiplexkanal mit Teilen des übergeordneten Ein-/Ausgabewerkes in Form eines Ein-/Ausgabeprozessors IOC, wie er beispielsweise aus der DE-AS 28 45 218 bekannt ist. Dabei ist lediglich der für den eigentlichen Datentransfer benötigte Teil berücksichtigt.

Der Schnittstellenanschluß des Arbeitsspeichers PMS der Datenverarbeitungsanlage ist über die Schnittstelle SSI zunächst mit einer internen Schnittstellensteuerung MINT verbunden, an deren einen Eingang der Pufferspeicher MMD angeschlossen ist. Dieser Pufferspeicher steht andererseits über ein Datenleitungssystem D-BUS mit einem den Datentransfer steuernden Mikroprozessor DVP-ST sowie mit den angeschlossenen Kanalsteuerungen, von denen nur die Kanalsteuerung CHn gezeigt ist, in Verbindung.

Die Kanalsteuerung weist gleichfalls einen Pufferspeicher BYMST auf, der für jedes angeschlossene Gerät eine Reihe von Datenwörtern zusammen mit Steuerinformationen für die Einordnung der nacheinander eintreffenden bzw. abzugebenden Datenwörter aufnimmt, wobei zwischen den beiden Pufferspeichern MMD und BYMST in beiden Richtungen jeweils ganze Gruppen von Datenwörtern abhängig von Steuersignalen des Mikroprozessors DVP-ST übertragen werden können. Die über die Schnittstelle SSS angeschlossenen Kanalleitungsbündel für die verschiedenen angeschlossenen peripheren Einheiten werden in an sich bekannter Weise durch Multiplexer MUX ausgewählt, wobei die einzelnen Auswahladressen durch die Auswahlsteuerung MUX-ST bereitgestellt werden. Weiterhin sind zwei Datenregister, DINR für die Datenworteingabe und DOUTR für die Datenausgabe, vorgesehen, die jeweils einerseits mit den entsprechenden Kanalleitungsbündeln DIN bzw. DOUT und andererseits mit den Datenleitungen DAT des Leitungssystems D-BUS koppelbar sind.

An den Ausgang des Dateneingaberegisters DINR ist ein weiteres Register DEVR angeschlossen, das der Zwischenspeicherung der jeweiligen Gerätenummer dient und damit eine Teiladresse für die Ansteuerung des Pufferspeichers BYMST liefert, die jeweils einen ganzen Speicherbereich im Pufferspeicher BYMST für die Aufnahme der Parameterdaten und der einzelnen Datenwörter kennzeichnet. Außerdem ist mit dem Pufferspeicher ein Parameterregister PARAMS gekoppelt, dessen Werte in Verbindung mit der Gerätenummer aus dem Register DEVR in Verbindung mit der Steuerung ST die Einordnung bzw. die Bereitstellung der einzelnen Datenwörter beim Datentransfer mit den angeschlossenen peripheren Einheiten steuert, wobei die die einzelnen Datenwörter auf den Kanalleitungsbündeln CIN/COUT begleitenden Signale ebenfalls von der Auswahlsteuerung MUX-ST abhängig von Steuersignalen auf den Signalleitungen CONTROL des Datenleitungssystems D-BUS ausgewertet bzw. geliefert werden.

Der gesamte Datenverkehr zwischen den peripheren Einheiten und dem Arbeitsspeicher PMS erfolgt also unabhängig von der Übertragungsrichtung in drei Stufen, nämlich Übernahme mehrerer Datenwörter aus dem Arbeitsspeicher PMS in den Pufferspeicher MMD, Weiterleitung der zwischengespeicherten Datenwörter vom Pufferspeicher MMD an den Pufferspeicher BYMST und schließlich die Weiterleitung der Datenwörter einzeln nacheinander an die jeweils zuständige periphere Einheit und umgekehrt, wobei abgesehen von der Übertragung der Daten zwischen dem Arbeitsspeicher PMS und dem Pufferspeicher MMD alle Übertragungsschritte von dem Prozessor DVP-ST kontrolliert werden.

Ergänzend zu dieser bekannten Anordnung sind in Auswirkung der Erfindung das Leitungssystem D-BUS und die Kanalsteuerung CHn über drei Register miteinander gekoppelt, von denen zwei, nämlich DBINR und DBOUTR, die Datenwege DAT mit dem internen Datenleitungssystem BYM-BUS der Kanalsteuerung und das dritte, nämlich FREGSEL, die Signalleitungen CONTROL mit der Speichersteuerung ST verbinden, wobei zusätzliche Anpassungsschaltungen TU den verwendeten unterschiedlichen Schaltkreistechniken Rechnung tragen, z. B. bei Verwendung der ECL-Technik für den Ein-/Ausgabeprozessor IOC und der TTL-Technik für die Kanalsteuerung CHn.

Diese Anpassungsschaltungen TU bewirken zusätzliche Signallaufzeiten, so daß z. B. das Lesen von Datenwörtern aus dem Speicher BYMST und deren Übertragung in den anderen Speicher MMD insgesamt 240 ns gegenüber einer Arbeitszyklusdauer des Mikroprozessors DVP-ST von 140 ns erforderlich. Ein Datentransfer vom Speicher BYMST zum Speicher MMD kann daher nicht durch einen einzigen Arbeitszyklus gesteuert werden, wohl aber ein Datentransfer in umgekehrter Richtung.

Damit der Mikroprozessor DVP-ST dennoch effektiv beim Datenaustausch zwischen den beiden Pufferspeichern arbeiten kann, bewirken die zusätzlichen Register FREGSEL, DBINR und DBOUTR eine Zwischenspeicherung abhängig von einem für alle Register gemeinsamen Takt T, der in an sich bekannter weise auf einer der Signalleitungen CONTROL vom Mikroprozessor DVP-ST zur Steuerung der Kanalsteuerung CHn geliefert wird.

Zur Erläuterung der Wirkungsweise dieser Zwischenregister zeigt Fig. 2 einen entsprechenden Ausschnitt von Fig. 1, der sich allein auf die für den Datenaustausch zwischen den beiden Pufferspeichern MMD und BYMST benötigten Übertragungswege beschränkt.

Normalerweise könnte ein Transferbefehl der Mikroprozessorsteuerung DVP-ST mit Lesen aus dem Pufferspeicher BYMST innerhalb eines Arbeitszyklus ausgeführt werden, indem zunächst ein Lesebefehl mit der zugehörigen Speicheradresse zu Beginn des Arbeitszyklus an den Pufferspeicher BYMST übertragen, das zugehörige Datenwort gelesen und dieses dann gegen Ende des Arbeitszyklus in den Pufferspeicher MMD an der bezeichneten Stelle eingespeichert wird. Im vorliegenden Fall ist aber der sich aus der Arbeitszeit AZ des Speichers BYMST und den Laufzeiten LF der Übertragungswege ergebende Zeitbedarf zu groß. Gemäß der Erfindung wird demzufolge der Transfervorgang in drei Übertragungsphasen aufgeteilt, was durch die Hinweise PH1 bis PH3 angedeutet ist.

Während der ersten Übertragungsphase PH1 wird der Pufferspeicher BYMST angesteuert und das gelesene Datenwort am Eingang des Registers DBINR bereitgestellt. In der nächsten Phase PH2 übernimmt das register das Datenwort, so daß es zu Beginn der dritten Phase PH3 am Eingang des aufnehmenden Pufferspeichers MMD bereitsteht und während dieser Phase eingespeichert werden kann.

Alle diese Übertragungsphasen werden durch einen einzigen Steuerimpuls T ausgelöst, der z. B. entsprechend dem Übernahmeimpuls im Arbeitszyklus gegen Ende eines jeden Arbeitszyklus wirksam wird, so daß gleichzeitig verschiedene Übertragungsphasen aufeinanderfolgender Transferoperationen ausgeführt werden können.

Fig. 3 verdeutlicht diesen Zusammenhang in Form einer Tabelle, wobei in der Waagerechten die nacheinander ablaufenden Arbeitszyklen der Elementaropertionen EO des Mikroprozessors DVP-ST angegeben sind, die jeweils den Phasensteuerimpuls T liefern, während die linke senkrechte Spalte angibt, welches Register oder welcher Speicher entsprechend den verschiedenen Übertragungsphasen die bereitgestellten Informtionen übernimmt.

Mit dem ersten Arbeitszyklus wird der Leseauftrag L-DAT1 für das erste Datenwort in das Register FREGSEL übernommen, so daß das gelesene Datenwort DAT1 mit dem zweiten Arbeitzyklus in das Register DBINR übernommen und mit dem dritten Arbeitszyklus im Pufferspeicher MMD gespeichert werden kann. Parallel dazu kann mit dem zweiten Arbeitszyklus bereits der zweite Leseauftrag L-DAT2 vom Register FREGSEL entgegengenommen werden, so daß mit dem dritten Arbeitszyklus auch das zweite Datenwort DAT2 in das Register DBINR eingetragen wird. Außerdem kann mit dem dritten Arbeitszyklus das Register FREGSEL einen neuen Leseauftrag L-DAT3 übernehmen usw.

Ab dem dritten Arbeitszyklus können daher fortlaufend mit jedem Arbeitszyklus Datenwörter DAT1, DAT2, DAT3... in den Speicher MMD eingeschrieben werden, wenn die Folge der Leseaufträge nicht unterbrochen wird.

Der Vorlauf bis zur Bereitstellung der Daten im Speicher MMD beträgt jeweils nur einmal zwei Arbeitszyklen und fällt umso weniger ins Gewicht, je mehr Daten jeweils in Folge ausgetauscht werden.

Infolge dieses Vorlaufes muß die Adresse mit dem Schreibhinweis für den Speicher MMD entsprechend um zwei Arbeitszyklen verzögert bereitgestellt werden. Dies kann entweder durch entsprechende Gestaltung des Steuerprogramms, nämlich durch einen entsprechenden Zusatzbefehl im zeitgerechten Arbeitszyklus, oder aber durch eine taktgesteuerte Schiebeeinrichtung mit entsprechend vielen Schiebestufen für die Schreibbefehle sichergestellt werden.

Bei den für Fig. 2 zugrundegelegten Randbedingungen kann dagegen ein Austausch vom Speicher MMD zum Speicher BYMST in gewohnter Weise von einem Arbeitszyklus ausgeführt werden. Das Register DBOUTR wäre daher normalerweise nicht erforderlich. Es ergeben sich jedoch zusätzliche Vorteile, wenn der Datenaustausch analog der ersten Übertragungsphase des Datentransfers in Gegenrichtung abläuft, also neben der Zwischenspeicherung der Schreibadresse im Register FREGSEL auch das Datenwort im Register DBOUTR zwischengespeichert und anschließend in den Speicher BYMST eingeschrieben wird. Dadurch können auch Leseaufträge abwechselnd mit Schreibaufträgen gemischt werden, ohne daß der Datenfluß beeinträchtigt wird, da weiterhin mit jedem Arbeitszyklus ein Datenwort ausgetauscht werden kann, als wäre kein Zeitverzug gegeben.

Die Tabelle von Fig. 3 verdeutlicht auch diesen Zusammenhang. So sind z. B. mit den Arbeitszyklen 4, 6 und 8 Schreibaufträge S-DAT4 bis S-DAT8 in die Leseauftragskette L-DAT1 bis L-DAT7 eingefügt. Diese Schreibaufträge werden jeweils mit demselben Arbeitszyklus erledigt, wie in der Zeile DBOUTR/BYMST bezüglich der Datenwörter DAT4, DAT6 und DAT8 angegeben ist. Parallel dazu aber werden auch die einzelnen Phasen der Leseaufträge weitergeführt, so daß z. B. mit dem vierten Arbeiszyklus überlappend in die beiden Speicher MMD und BYMST und mit den nachfolgenden Arbeitszyklen abwechselnd in den Speicher MMD oder in den Speicher BYMST eingeschrieben wird. Es wird also gleichfalls mit jedem Arbeitszyklus ein Datenaustausch abgeschlossen und damit die Leistungsfähigkeit des Mikroprozessors DVP-ST trotz des größeren Zeitverzuges weitgehend unvermindert aufrechterhalten.

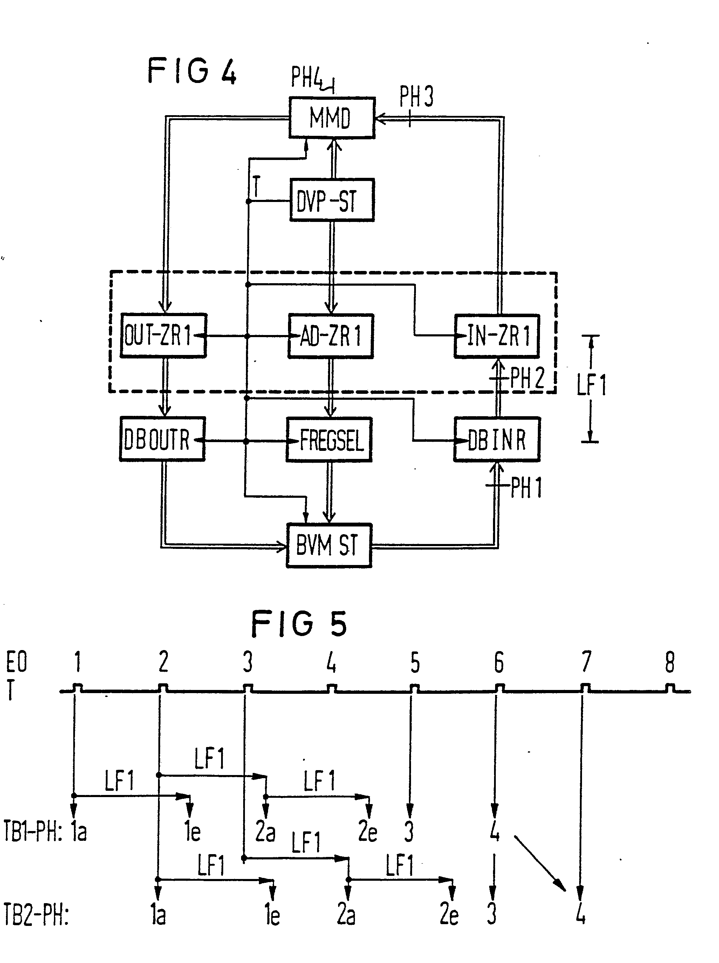

Fig. 4 zeigt eine gegenüber der von Fig. 2 ergänzte Anordnung für den Fall, daß größere Laufzeiten auf den Übertragungswegen zu berücksichtigen sind. Die Ergänzung besteht in einem zusätzlichen Register ZR1 je Übertragungsweg OUT, AD, IN innerhalb des punktierten Bereiches zur Überbrückung eines größeren Laufzeitabschnittes LF1 zwischen den beiden Speichern MMD und BYMST. Der Abstand der jeweils zwei Register, z. B. AD-ZR1 und FREGSEL, ist daher entsprechend groß zu wählen, während die Restlaufzeiten von und zu den benachbarten Speichern jeweils ausreichend klein sein sollten.

Auf dem Weg zum entfernten Speicher BYMST werden durch einen einzigen Phasensteuerimpuls T die bereitgestellten Informationen jeweils entsprechend dem Laufzeitverzug dieses Steuerimpulses nacheinander über die Register zum Speicher BYMST weitergeleitet und erst damit die Phase PH1 wie bei der Anordnung von Fig. 2 abgeschlossen, was im zugehörigen Zeitdiagramm von Fig. 5 bei den einzelnen Transferbefehlen TB1 und TB2 mit 1e gekennzeichnet ist.

Der nachfolgende zweite Phasensteuerimpuls des Arbeitszyklus EO2 hat denselben Weg zurückzulegen, so daß die Übertragungsphase PH2 annähernd um die Dauer eines Arbeitszyklus EO später beginnt (2a) und nach Überbrückung des Laufzeitabschnittes LF1 mit 2e endet. Die nachfolgend wirksamen Phasensteuerimpulse, z. B. die der Arbeitszyklen 5 und 6, werden dagegen unverzögert wirksam und führen die Übertragungsphasen PH3 und PH4 aus. Die von den beiden dazwischenliegenden Arbeitszyklen EO3 und 4 ausgelösten Phasensteuerimpulse sind dagegen auf den Transfervorgang ohne Auswirkung, da sie mit vorhergehend bereits abgespeicherten Informationen zusammentreffen und diese nicht verändern. Es muß nur sichergestellt werden, daß die Übernahme in den Speicher MMD mit dem entsprechenden Verzug ausgeführt wird, daß also, wie bereits erläutert, der Schreibauftrag für den Speicher MMD um eine entsprechende Anzahl von Arbeitszyklen — beim gewählten Beispiel sind es fünf Arbeitszyklen, später wirksam wird.

Wie Fig. 5 für zwei aufeinanderfolgende, im Arbeitszyklus EO1 und 2 ausgelöste Lesetransferbefehle TB1 und TB2 zeigt, erhöhen sich zwar die Vorlaufzeiten bis zur tatsächlichen Einspeicherung in den Speicher MMD, danach aber erhält man jedoch wie bei der Anordnung von Fig 2, und zwar dieses Mal ab dem Arbeitszyklus EO6, bei einer geschlossenen Folge von Leseaufträgen eine geschlossene Folge von Datenwörtern zum Einspeichern in den Speicher MMD.

Analoges gilt bezüglich des bereits anhand von Fig. 3 erläuterten Effekts bei abwechselnden Lese- und Schreibaufträgen für den Speicher BYMST.

Die jeweils an den beiden Enden der Laufzeit behafteten Übertragungsstrecken vorgesehenen Register entkoppeln in diesem Falle die internen Leitungssysteme D-BUS und BYM-BUS voneinander, so daß während eines laufenden Transferfehles während einzelner Arbeitszyklen nicht benötigte Teile der Leitungssysteme anderweitig genutzt werden können.

Aufgrund der Erfindung ist es also nur mit sehr geringem Aufwand, nämlich durch zusätzliche Register, die jeweils durch denselben Phasensteuerimpuls getaktet werden, möglich, durch zu große Speicherarbeitszeiten und/oder Laufzeiten auf den Übertragungswegen an sich bedingte Leistungsminderungen der Mikroprozessorsteuerung aufzufangen. Dabei ist die Anwendung der Erfindung nicht nur auf das Gebiet der Datenverarbeitungsanlagen, wie beim Ausführungsbeispiel zugrundegelegt, beschränkt, sondern sie ist überall da vorteilhaft anwendbar, wo sich ähnliche Probleme durch den Einsatz von taktgebundenen Steuerungen in Verbindung mit zwei Speichern ergeben.

**Patentansprüche**

1. Verfahren zum Austausch von Datenwörtern zwischen zwei Speichern, z. B. dem Pufferspeicher (BYMST) in einem Bytemultiplexkanal (CHn) und einem Pufferspeicher (MMD) der übergeordneten Ein-/Ausgabesteuerung (IOC) einer Datenverarbeitungsanlage, in der einen oder anderen Richtung abhängig von Befehlen einer Mikroprozessorsteuerung (DVP-ST) mit konstanter Dauer der einzelnen Arbeitszyklen (EO), dadurch gekennzeichnet, daß bei nicht durch einen Arbeitszyklus (EO) wegen zu großer Laufzeiten (LF) zwischen der Mikroprozessorsteuerung (DVP-ST) mit dem ersten Speicher (MMD) und dem entfernten zweiten Speicher (BYMST) und/oder Arbeitszeiten des zweiten Speichers ausführbaren Datentransfers (TB) die Ausführung in mehrere Übertragungsphasen (z. B. PH1 bis PH3) aufgeteilt wird und die verschiedenen Übertragungsphasen (PH1 bis PH3) von verschiedenen aufeinanderfolgenden Arbeitszyklen (z. B. EO1 bis EO3) der Mikroprozessorsteuerung (DVP-ST) ausgelöst werden und daß alle Übertragungsphasen (PH1 bis PH3) jeweils durch einen vom jeweiligen Arbeitszyklus (EO) mit fester Phasenlage zu diesem abgeleiteten Phasensteuerimpuls (T) gesteuert werden und jeweils eine Speicherung bzw. Zwischenspeicherung der in der vorhergehenden Übertragungsphase bereitgestellten Informationen bewirken, so daß jeweils gleichzeitig die verschiedenen Übertragungsphasen aufeinanderfolgender Austauschoperationen ausführbar sind.

2. Verfahren nach Anspruch 1, dadurch gekennzeichnet, daß für den Datentransfer vom zweiten (BYMST) zum ersten Speicher (MMD) mindestens drei Übertragungsphasen (PH1 bis PH3) vorgesehen sind, nämlich eine zur Zwischenspeicherung der von der Mikroprozessorsteuerung (DVP-ST) bereitgestellten Speicheradresse mit Freigabe des dadurch gekennzeichneten Datenwortes im zweiten Speicher (BYMST), eine zweite zur Zwischenspeicherung des freigegebenen Daten wortes und eine dritte zur Übernahme des zwischengespeicherten Datenwortes in den ersten Speicher (MMD) anhand der für diesen Speicher zeitgerecht bereitgestellten Adresse.

3. Verfahren nach Anspruch 2, dadurch gekennzeichnet, daß der Datentransfer vom ersten Speicher (MMD) zum zweiten Speicher (BYMST) analog der ersten Übertragungsphase (PH1) des Datentransfers in Gegenrichtung durch einen Phasensteuerimpuls gesteuert abläuft, wobei zusätzlich das vom ersten Speicher (MMD) freigegebene Datenwort neben der Adresse für den zweiten Speicher (BYMST) zwischengespeichert und unmittelbar danach im durch die Adresse gekennzeichneten Speicherplatz des zweiten Speichers (BYMST) abgespeichert wird.

4. Verfahren nach Anspruch 2 und 3, dadurch gekennzeichnet, daß zur Überbrückung größerer Laufzeiten (LF1) zwischen den beiden Speichern (MMD und BYMST) in allen Übertragungswegen beider Übertragungsrichtungen jeweils mindestens eine weitere Zwischenspeicherung der übertragenen Informationen in der Nähe des ersten Speichers (MMD) erfolgt, so daß die Restlaufzeiten von und zum benachbarten Speicher (BYMST bzw. MMD) jeweils ausreichend klein sind, und daß auf dem Weg zum zweiten Speicher (BYMST) die Informtionen entsprechend dem Laufzeitverzug des begleitenden einzigen zugehörigen Phasensteuerimpulses (T) nacheinander von Zwischenspeicherstufe zu Zwischenspeicherstufe und schließlich an den zweiten Speicher (BYMST) weitergeleitet werden, während in umgekehrter Richtung die aufeinanderfolgenden Zwischenspeicherungen der Datenwörter von verschiedenen Phasensteuerimpulsen (T) ausgelöst werden und getrennte Übertragungsphasen (z. B. PH2 bis PH4) einleiten.

5. Anordnung zur Durchführung des Verfahrens nach Anspruch 2 oder 3, dadurch gekennzeichnet, daß in jedem Übertragungsweg zum und vom zweiten Speicher (BYMST) jeweils ein taktgesteuertes Register (DBOUTR, FREGSEL, DBINR) vorgesehen ist, daß die Taktanschlüsse aller Register mit derselben, den Phasensteuerimpuls (T) je Arbeitszyklus (EO) liefernden Taktleitung der Mikroprozessorsteuerung (DVP-ST) verbunden sind und daß die Taktleitung außerdem mit dem Takteingang der Steuereinrichtung für den zweiten Speicher (BYMST) verbunden ist, wobei die Schreib- oder Lesesignale von der Steuereinrichtung jeweils verzögert nach Bereitstellung der Speicheradressen für die Ansteuerung ausgelöst werden und die Übernahme des einzuschreibenden Datenwortes in den zweiten Speicher bzw. die Freigabe des adressierten Datenwortes am Ausgang des zweiten Speichers bewirken.

6. Anordnung nach Anspruch 5 zur Durchführung des Verfahrens nach Anspruch 4, dadurch gekennzeichnet, daß zur Durchführung weiterer Zwischenspeicherungen zusätzliche taktgesteuerte Register (z. B. OUT-ZR1, AD-ZR1, IN-ZR1) mit den zu überbrückenden Laufzeiten (z. B. LF1) entsprechenden Abständen in den Übertragungswegen vorgesehen sind.

## Claims

1. A method of exchanging data words between two stores, e. g. the buffer store (BYMST) in a byte multiplex channel (CHn) and a buffer store (MMD) of the superordinate input/output control unit (IOC) in a data processing system, in the one or other direction in dependence upon commands of a microprocessor control unit (DVP-ST) with a constant duration of the individual operating cycles (EO), characterised in that in the case of data transfers (TB) which cannot be executed by one operating cycle (EO) because of excessive delay times (LF) between the microprocessor control unit (DVP-ST) with the first store (MMD) and the remote second store (BYMST) and/or operating times of the second store, the execution is divided into a plurality of transfer phases (PH1 to PH3) and the various transfer phases (PH1 to PH3) are triggered by various, consecutive operating cycles (e. g. EO1 to EO3) of the microprocessor control unit (DVP-ST), and that all the transfer phases (PH1 to PH3) are each controlled by a phase control pulse (T) which is derived from the respective operating cycle (EO) with a fixed phase position in relation thereto and each results in the storage or intermediate storage of the items of information made available in the previous transfer phase, so that the various transfer phases of consecutive exchange operations can in each case be executed simultaneously.

2. A method as claimed in claim 1, characterised in that for the data transfer from the second store (BYMST) to the first store (MMD) at least three transfer phases (PH1 to PH3) are provided, namely one for the intermediate storage of the store address, made available by the microprocessor control unit (DVP-ST), with the release of the data word, thus characterised, in the second store (BYMST), a second for the intermediate storage of the released data word, and a third for the transfer of the intermediately stored data word into the first store (MMD) on the basis of the address promptly made available for this store.

3. A method as claimed in claim 2, characterised in that the data transfer from the first store (MMD) to the second store (BYMST) takes place similarly to the first transfer phase (PH1) of the data transfer in the opposite direction, under the control of a phase control pulse, where in addition to the address for the data store (BYMST), the data word released by the first store (MMD) is intermediately stored, and immediately thereafter is input into that storage location of the second store (BYMST) characterised by the address.

4. A method as claimed in claim 2 and claim 3, characterised in that in order to bridge longer delay times (LF1) between the two stores (MMD and BYMST) in all the transfer paths of the two transfer directions at least one further intermediate storage of the transferred items of information takes place in the region of the first store (MMD) so that the residual delay times from and to the adjacent store (BYMST and MMD) are in each case sufficiently short, and that on the path to the second store (BYMST) the items of information are forwarded in accordance with the time delay of the accompanying, single, associated phase control pulse (T) consecutively from intermediate storage stage to intermediate storage stage and finally to the second store (BYMST), whereas in the reverse direction the consecutive intermediate storage of the data words is in each case triggered by different phase control pulses (T) and in each case initiates separate transfer phases (PH2 to PH4).

5. An arrangement for carrying out the method claimed in claim 2 or claim 3, characterised in that each transfer path to and from the second store (BYMST) includes a clock-controlled register (DBOUTR, FREGSEL, DBINR), that the clock terminals of all the registers are connected to the same clock line — which supplies the phase control pulse (T) in respect of each operating cycle (EO) — of the microprocessor control unit (DVP-ST), and that the clock line is also connected to the clock input of the control device for the second store (BYMST), where the write- or read signals are triggered by the control device, with a delay after the store addresses have been made available for the activation and themselves trigger the transfer of the data word, which is to be input, into the data store and the release of the address data word at the output of the second store.

6. An arrangement as claimed in claim 5 for carrying out the method claimed in claim 4, characterised in that in order to carry out additional intermediate storage, additional clock-controlled registers (e. g. OUT-ZR1, AD-ZR1, IN-ZR1) are provided in the transfer paths at intervals corresponding to the delay times (e. g. LF1) which are to be bridged.

**Revendications**

1. Procédé pour l'échange de mots de données entre deux mémoires, par exemple la mémoire tampon (BYMST) dans un canal de multiplexage bytes (CHn) et une mémoire tampon (MMD) de la commande d'entrée/sortie (IOC), de niveau supérieur, d'une installation de traitement de données, dans l'une ou l'autre direction, en fonction d'instructions d'une commande à microprocesseur (DVP-ST), à durée constante des différents cycles de travail (EO), caractérisé en ce que, au cas où un transfert de données (TB) ne peut pas être exécuté par un cycle de travail (EO), en raison de temps de propagation (LF) trop longs entre la commande à microprocesseur (DVP-ST), avec la première mémoire (MMD), et la seconde mémoire (BYMST), qui est éloignée, et/ou en raison de temps de travail trop longs de la seconde mémoire, l'exécution est partagée en plusieurs phases de transmission (PH1 à PH3 par exemple) et les différentes phases de transmission (PH1 à PH3) sont déclenchées par plusieurs cycles de travail successifs (EO1 à EO3 par exemple) de la commande à microprocesseur (DVP-ST), et que toutes les phases de transmission (PH1 à PH3) sont commandées par une impulsion de commande (T) qui est dérivée du cycle de travail et/ou concerné, à position de phase fixe par rapport à celui-ci, les phases de transmission produisant une mémorisation ou une mémorisation intermédiaire des informations mises à disposition dans la phase de transmission précédente, de manière que les différentes phases de transmission d'opérations d'échange successives puissent être exécutées simultanément.

2. Procédé selon la revendication 1, caractérisé en ce que trois phases de transmission (PH1 à PH3) au moins sont prévues pour le transfert de données depuis la seconde mémoire (BYMST) à la première mémoire (MMD), à savoir une phase pour la mémorisation temporaire de l'adresse de mémoire présentée par la commande à microprocesseur (DVP-ST), avec libération du mot de données caractérisé par cette adresse dans la seconde mémoire (BYMST), une deuxième phase pour la mémorisation temporaire du mot de données libéré et une troisième phase pour la reprise dans la première mémoire (MMD) du mot de données mémorisé temporairement, à l'aide de l'adresse présentée en temps voulu pour cette première mémoire.

3. Procédé selon la revendication 2, caractérisé en ce que le transfert de données de la première mémoire (MMD) à la seconde mémoire (BYMST) se déroule, sous la commande d'une impulsion de commande de phase, de façon analogue à la première phase de transmission (PH1) du transfert de données en sens contraire, le mot de données libéré par la première mémoire (MMD) étant mémorisé temporairement en plus, à côté de l'adresse pour la seconde mémoire (BYMST), et étant mémorisé immédiatement après à l'emplacement caractérisé par cette adresse de la seconde mémoire (BYMST).

4. Procédé selon les revendications 2 et 3, caractérisé en ce que, pour couvrir des temps de propagation (LF1) relativement longs entre les deux mémoires (MMD et BYMST), au moins une mémorisation temporaire des informations transmises est effectuée en plus, dans toutes les voies de transmission pour les deux directions de transmission, à proximité de la première mémoire (MMD), si bien que les temps de propagation résiduels depuis et vers la mémoire voisine (BYMST ou MMD) sont suffisamment courts, et que, sur le chemin vers la seconde mémoire (BYMST), les informations sont transmises successivement d'un étage de mémoire intermédiaire à l'autre et finalement à la seconde mémoire (BYMST), conformément au décalage du temps de propagation de l'unique impulsion de commande de phase correspondante et qui accompagne les informations, tandis que, en direction inverse, les mémorisations temporaires successives des mots de données sont déclenchées par plusieurs impulsions de commande de phase (T) et amorcent des phases de transmission séparées (PH2 à PH4 par exemple).

5. Dispositif pour la mise en œuvre du procédé selon la revendication 2 ou 3, caractérisé en ce qu'un registre à commande rythmée (DBOUTR, FREGSEL, DBINR) est prévu dans chaque voie de transmission vers et depuis la seconde mémoire (BYMST), que les bornes de rythme de tous les registres sont reliées à la même ligne de rythme de la commande à microprocesseur (DVP-ST), ligne qui fournit l'impulsion de commande de phase (T) pour chaque cycle de travail (EO), et que la ligne de rythme est reliée en outre à l'entrée du rythme du dispositif de commande pour la seconde mémoire (BYMST), les signaux d'écriture ou de lecture étant déclenchés chaque fois de façon retardée par le dispositif de commande, après mise à disposition des adresses de mémoire pour l'attaque, et ces signaux produisant la reprise du mot de données à inscrire dans la seconde mémoire, respectivement la libération du mot de données adressé à la sortie de la seconde mémoire.

6. Dispositif selon la revendication 5, pour la mise en œuvre du procédé selon la revendication 4, caractérisé en ce que, pour l'exécution de mémorisations temporaires supplémentaires, des registres supplémentaires (par exemple OUT-ZR1, AD-ZR1, IN-ZR1), qui sont commandés de façon rythmée, sont prévus dans les voies de transmission à des intervalles qui correspondent aux temps de propagation (LF1 par exemple) à couvrir.

0 161 336

FIG 1

# FIG 2

# FIG 3

| Übernahme durch | EO-Zyklen | | | | | | | |
|---|---|---|---|---|---|---|---|---|
| | 1 | 2 | 3 | 4 | 5 | 6 | 7 | 8 |
| FREGSEL | L-DAT 1 | L-DAT 2 | L-DAT 3 | S-DAT 4 | L-DAT 5 | S-DAT 6 | L-DAT 7 | S-DAT 8 |
| DBINR | — | DAT 1 | DAT 2 | DAT 3 | — | DAT 5 | — | DAT 7 |
| MMD | — | — | S-DAT 1 | S-DAT 2 | S-DAT 3 | — | S-DAT 5 | — |
| DBOUTR / BYM ST | — | — | — | DAT 4 | — | DAT 6 | — | DAT 8 |

## FIG 4

## FIG 5